## Europäisches Patentamt

## European Patent Office

## Office européen des brevets

(19)

(11) Veröffentlichungsnummer: **0 007 553 B1**

(12) **EUROPÄISCHE PATENTSCHRIFT**

(45) Veröffentlichungstag der Patentschrift:
**23.09.81**

(51) Int. Cl.³: **G 01 F 1/32**

(21) Anmeldenummer: **79102479.7**

(22) Anmeldetag: **16.07.79**

(54) **Strömungsmesseinrichtung nach dem Prinzip der Kármán'schen Wirbelstrasse.**

(30) Priorität: **21.07.78 DE 2832142**

(43) Veröffentlichungstag der Anmeldung:
**06.02.80 Patentblatt 80/3**

(45) Bekanntmachung des Hinweises auf die Patenterteilung:
**23.09.81 Patentblatt 81/38**

(84) Benannte Vertragsstaaten:
**FR GB**

(56) Entgegenhaltungen:
**DE-A-2 035 545**
**DE-A-2 446 856**
**US-A-3 564 915**
**US-A-3 927 566**
**US-A-3 972 232**
**US-A-4 052 895**

(73) Patentinhaber: **SIEMENS AKTIENGESELLSCHAFT Berlin und München, Postfach 22 02 61, D-8000 München 22 (DE)**

(72) Erfinder: **Klobe, Martin, August-Bebel-Strasse 87, D-7500 Karlruhe (DE)**

BUNDESDRUCKEREI BERLIN

Strömungsmeßeinrichtung nach dem Prinzip der Kármán'schen Wirbelstraße

Die Erfindung bezieht sich auf eine Strömungsmeßeinrichtung nach dem Prinzip der Kármán'schen Wirbelstraße mit einem innerhalb eines Rohrabschnitts angeordneten, wirbelerzeugenden Staukörper, der aus einem vorderen, mit seiner größeren Parallelfläche entgegen der Strömungsrichtung angeordneten prismatischen Teil mit trapezförmigem Querschnitt und einem an dessen rückwärtige Parallelfläche anschließenden, im wesentlichen quaderförmigen, sich in Strömungsrichtung erstreckenden Fortsatz gebildet ist, sowie mit Druckaufnehmern zur Messung der durch die Wirbelablösung entstehenden, der Strömungsgeschwindigkeit proportionalen periodischen Druckschwankungen.

Eine derartige Meßeinrichtung ist beispielsweise aus der US-PS 3 972 232 bekannt. Der dort dargestellte Staukörper setzt sich T-förmig aus einem relativ schmalen prismatischen Vorderteil mit trapezförmigem Querschnitt und einem anschließenden quaderförmigen Teil relativ großer Dicke zusammen. Die Mittel zur Messung der Druckschwankungen in Form von piezoelektrischen Aufnehmern sind in dem quaderförmigen Teil angeordnet, derart, daß die druckempfindlichen Flächen in den strömungsparallelen oberen und unteren Seitenflächen des quaderförmigen Teils angebracht sind.

Es hat sich herausgestellt, daß je nach Art des Meßmediums und der Strömungsgeschwindigkeit der quaderförmige Fortsatz und mit ihm die Außenflächen des darin untergebrachten Druckaufnehmers den erodierenden Einflüssen und/oder Verschmutzungen und Ablagerungen ausgesetzt sind. Es besteht demgemäß die Aufgabe, eine für die Wirbelablösung günstige Form des Staukörpers zu finden und die die Druckaufnehmer enthaltenden oder betätigenden Flächen in einer möglichst störungsfreien Zone anzuordnen.

Eine Lösung der Aufgabe wird in einer Meßeinrichtung gemäß dem Oberbegriff des Anspruchs 1 gesehen mit einem Staukörper, der die im Anspruch 1 angegebenen kennzeichnenden Merkmale aufweist.

Mit den angegebenen Abmessungen ergeben sich besonders günstige Wirbelablösungseffekte an dem vorderen Teil des Staukörpers, verbunden mit dem Vorteil einer größeren Freizügigkeit in der Wahl und Anbringung der Druckaufnehmer in dem prismatischen Teil des Staukörpers.

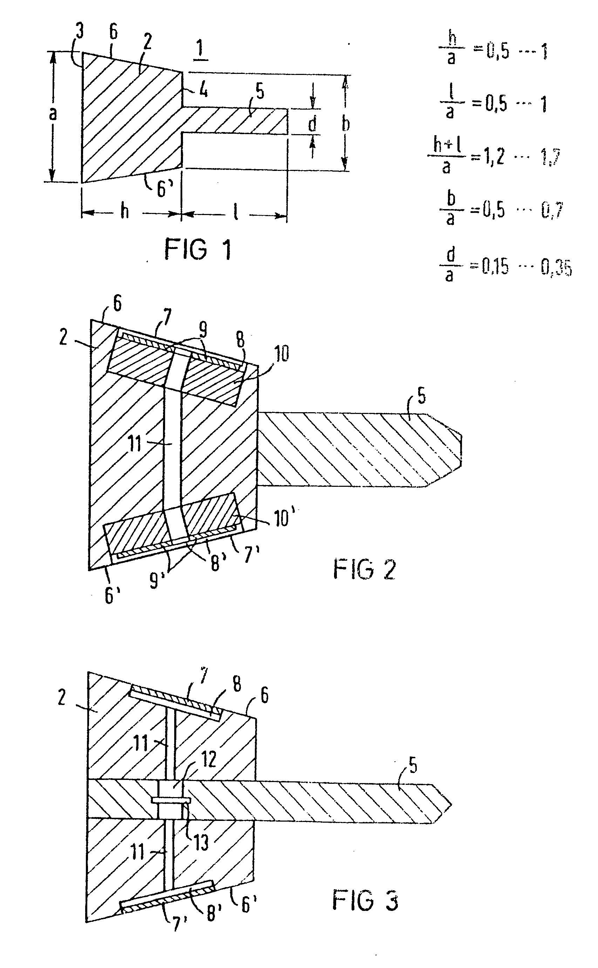

Zur Erläuterung der Erfindung sind in den Fig. 1 und 2 Ausführungsbeispiele schematisch dargestellt und im folgenden beschrieben.

In Fig. 1 ist die Form des Querschnitts eines Staukörpers 1 dargestellt. Er besteht aus einem vorderen, mit seiner größeren Parallelfläche 3 der Seitenlänge a entgegen der Strömungsrichtung angeordneten prismatischen Teil 2 und einem an dessen rückwärtige Parallelfläche 4 der Seitenlänge b anschließenden, im wesentlichen quaderförmigen und sich in Strömungsrichtung erstreckenden Fortsatz 5 mit der Seitenlänge 1 und der Dicke d. Mit den angegebenen Abmessungsverhältnissen, bezogen auf die längere Parallelseite a des prismatischen Teils 2 ergeben sich günstige Betriebsverhältnisse.

Die nicht parallelen Seitenflächen 6 und 6' des prismatischen Teils 2 mit trapezförmigem Querschnitt sind, wie in Fig. 2 näher dargestellt, wenigstens teilweise als bewegliche Wände, insbesondere als unter Druck auslenkbare Membrane 7 und 7', ausgebildet.

Diese Membrane schließen flache, in den Seitenflächen 6 und 6' des prismatischen Körpers 2 angebrachte Ausnehmungen nach außen dicht ab, so daß Kammern 8, 8' entstehen.

In diesen Kammern 8 und 8' oder in Verbindung mit ihnen sind Wandler zur Umsetzung der von der periodischen Druckschwankungen verursachten Membranauslenkungen angeordnet, die der Amplitude und Frequenz dieser Druckschwankungen proportionale elektrische Signale abgeben.

Als Wandler können Weg- oder Wegänderungsmeßaufnehmer bekannter Art eingesetzt werden, die nach der kapazitiven, induktiven, resistiven oder piezoelektrischen Methode arbeiten.

In Fig. 2 sind beispielsweise kapazitive Meßaufnehmer dargestellt, bei denen die Membrane 7 und 7' mindestens auf ihrer Innenfläche aus Metall bestehen und bewegliche Elektroden von Kondensatoren bilden, deren feste Elektroden 9 und 9' auf Isoliereinsätzen 10 und 10' in den Kammern 8 und 8' angebracht sind. Diese Kammern sind mit einer nicht kompressiblen Flüssigkeit gefüllt und über den Kanal 11 druckleitend verbunden, so daß die kapazitiven Aufnehmer in einer Differentialschaltung betrieben werden können.

Fig. 3 zeigt eine Ausführung eines aus mehreren Teilen aufgebauten Staukörpers, bei der die mit den Membranen 7, 7' abgeschlossenen flachen Kammern 8, 8' in den Seitenflächen 6, 6' mit nicht kompressibler Flüssigkeit gefüllt sind. Kanäle 11 verbinden die Kammern 8, 8' druckleitend mit einer etwa in der Mittelebene a-a' angeordneten und durch eine Trennwand 13 in zwei Hälften unterteilte Meßkammer 12. Die Trennwand 13 kann als eine dotierte Halbleitermembran mit piezoresistiven Eigenschaften ausgebildet sein, auf welche die durch Wirbelabriß an den Seitenflächen 6, 6' entstehenden und auf die Membrane 7, 7' wirkenden Druckimpulse wechselweise hydraulisch übertragen werden. Die Trennwand 13 kann auch aus druckempfindlichem Halbleitermaterial mit piezoelektrischen Eigenschaften hergestellt sein.

Eine andere, hier nicht bildlich dargestellte Möglichkeit besteht darin, die flüssigkeitsgefüllten Kammern 8 und 8', die mit den Membranen 7, 7' abgeschlossen sind, über Druckleitungen an außerhalb des Staukörpers 1 befindliche Druckwandler in an sich bekannter Weise anzuschließen.

**Patentansprüche**

1. Strömungsmeßeinrichtung nach dem Prinzip der Kármán'schen Wirbelstraße mit einem innerhalb eines Rohrabschnitts angeordneten wirbelerzeugenden Staukörper, der aus einem vorderen, mit seiner größeren Parallelfläche entgegen der Strömungsrichtung angeordneten prismatischen Teil mit trapezförmigem Querschnitt und einem an dessen rückwärtige Parallelfläche anschließenden, im wesentlichen quaderförmigen, sich in Strömungssrichtung erstreckenden Fortsatz gebildet ist, sowie mit Druckaufnehmern zur Messung der durch die Wirbelablösung entstehenden, der Strömungsgeschwindigkeit proportionalen periodischen Druckschwankungen, dadurch gekennzeichnet, daß die geometrischen Abmessungen des Staukörpers (1) folgenden Verhältnisangaben genügen:

$$\frac{h}{a} = 0,5 \ldots 1$$

$$\frac{l}{a} = 0,5 \ldots 1$$

$$\frac{h+l}{a} = 1,2 \ldots 1,7$$

$$\frac{b}{a} = 0,5 \ldots 0,7$$

$$\frac{d}{a} = 0,15 \ldots 0,35$$

wobei

a = längere Parallelseite des trapezförmigen Querschnitts,
b = kürzere Parallelseite des trapezförmigen Querschnitts,
h = Höhe des trapezförmigen Querschnitts,
l = Seitenlänge des quaderförmigen Fortsatzes und
d = Dicke des quaderförmigen Fortsatzes ist

und daß die nicht parallelen Seitenflächen (6, 6') des prismatischen Teils (2) mit trapezförmigem Querschnitt wenigstens teilweise als unter Druck auslenkbare Membrane (7, 7') ausgebildet sind, die die darunter liegenden Kammern (8, 8') abschließen und daß in oder in Verbindung mit diesen Kammern (8, 8') Wandler zur Umsetzung der Membranauslenkungen in proportionale elektrische Signale angeordnet sind.

2. Strömungsmeßeinrichtung nach Anspruch 1, dadurch gekennzeichnet, daß die Kammern (8, 8') mit einer nicht kompressiblen Flüssigkeit gefüllt und druckleitend miteinander verbunden sind.

3. Strömungsmeßeinrichtung nach Anspruch 1 oder 2, dadurch gekennzeichnet, daß mindestens die Innenfläche der Membran (7 oder 7') aus Metall besteht und Teil eines an sich bekannten kapazitiven oder induktiven Wegaufnehmers bildet.

4. Strömungsmeßeinrichtung nach Anspruch 1, dadurch gekennzeichnet, daß die Kammern (8, 8') mit einer nicht kompressiblen Flüssigkeit gefüllt und über Druckleitungen an außerhalb des Staukörpers (1) befindliche Druckwandler angeschlossen sind.

5. Strömungsmeßeinrichtung nach Anspruch 1, dadurch gekennzeichnet, daß die Kammern (8, 8') mit einer nicht kompressiblen Flüssigkeit gefüllt und druckleitend mit jeweils einer Hälfte einer, von einer druckempfindlichen Wand (13) unterteilten, vorzugsweise symmetrisch zur Mittelebene (a-a') des prismatischen Teils (2) gelegenen Meßkammer (12) verbunden sind.

**Claims**

1. A flow measuring device in accordance with the principle of the Karman vortex street which comprises a baffle member, which produces a vortex, is arranged within a pipe section, and comprises a front prismatic component of trapezoidal cross-section having its larger parallel surface arranged against the direction of flow, and a projection which is adjacent to the rear parallel surface of the prismatic component and which is essentially rectangular and which extends in the direction of flow, and which baffle member comprises pressure pick-ups for measuring the periodical pressure fluctions which are caused by the shedding of vortices and which are proportional to the velocity of flow, characterised in that the geometrical dimensions of the baffle member (1) satisfy the following conditions:

$$\frac{h}{a} = 0,5 \ldots 1$$

$$\frac{l}{a} = 0,5 \ldots 1$$

$$\frac{h+l}{a} = 1,2 \ldots 1,7$$

$$\frac{b}{a} = 0,5 \ldots 0,7$$

$$\frac{d}{a} = 0,15 \ldots 0,35$$

where

a = lon parallel side of the trapezoidal cross-section,

b = short parallel side of the trapezoidal cross-section,

h = height of the trapezoidal cross-section,

l = lateral length of the rectangular projection, and

d = thickness of the rectangular projection,

and in that the non-parallel side faces (6, 6') of the prismatic component (2) having a trapezoidal cross-section are at least partially constructed as membranes (7, 7') which can be deflected under pressure and which close underlying chambers (8, 8'), and in that in or in connection with these chambers (8, 8'), there are arranged transducers for converting the membrane deflections into proportional electrical signals.

2. A flow measuring device as claimed in claim 1, characterised in that the chambers (8, 8') are filled with an incompressible liquid and connected to one another so as to be pressure-conducting.

3. A flow measuring device as claimed in claim 1 or 2, characterised in that at least the inner surface of the membrane (7, 7') sonsists of metal and forms a part of a capacitive or inducitive motion pick-up which is known per se.

4. A flow measuring device as claimed in claim 1, characterised in that the chambers (8, 8') are filled with an incompressible liquid and connected via pressure lines to pressure transducers which are arranged outside the baffle member (1).

5. A flow measuring device as claimed in claim 1, characterised in that the chambers (8, 8') are filled with an incompressible liquid and each connected to a half of a measuring chamber (12) which is divided by a pressure-sensitive wall (13) and preferably arranged symmetrically to the centre plane (a-a') of the prismatic component (2).

**Revendications**

1. Dispositif de mesure écoulement suivant le principe de l'allée à tourbillons de Bénard-Karman, comprenant, dans un tronçon tubulaire, un obstacle, donnant des tourbillons, qui est constitué d'une partie prismatique amont, de section droite trapézoïdale, à grande force parallèle opposée au sens de l'écoulement et, issu de la face parallèle aval de cette partie, d'un appendice sensiblement parallèlé-pipédique, s'étendant dans le sens de l'écoulement, ainsi que des sondes de pression destinées à mesurer les fluctuations périodiques de pression, proportionnelles à la vitesse de l'écoulement, que crée le décollement des tourbillons, caractérisé en ce que les dimensions géométriques de l'obstacle (1) satisfont aux relations suivantes:

$$\frac{h}{a} = 0,5 \ldots 1$$

$$\frac{l}{a} = 0,5 \ldots 1$$

$$\frac{h+l}{a} = 1,2 \ldots 1,7$$

$$\frac{b}{a} = 0,5 \ldots 0,7$$

$$\frac{d}{a} = 0,15 \ldots 0,35$$

dans lesquelles:

a est le côté parallèle le plus long de la section droite trapézoïdale;

b est la côté parallèle le plus court de la section droite trapézoïdale;

h est la hauteur de la section droite trapézoïdale;

l est la longueur latérale de l'appendice parallèlé-pipédique; et

d est l'épaisseur latérale, de l'appendice parallèlépipédique;

et les faces (6, 6') latérales, non parallèles, de la partie (2) prismatique, de section droite trapézoïdale, affectent, au moins en partie, la forme de membranes (7, 7') qui peuvent s'écarter sous l'effet de la pression et qui ferment les chambres (8, 8') sous-jacentes et des transducteurs, destinés à transformer les écartements des membranes en signaux électriques proportionnels, sont placés dans ces chambres (8, 8') ou sont en liaison avec elles.

2. Dispositif suivant la revendication 1, caractérisé en ce que les chambres (8, 8') sont emplies d'un liquide incompressible et communiquent les unes avec les autres de manière à communiquer la pression.

3. Dispositif suivant la revendication 1 ou 2, caractérisé en ce qu'au moins la face intérieure de la membrane (7 ou 7') est en métal, et forme une partie d'un capteur de déplacement capacitif ou inductif connu.

4. Dispositif suivant la revendication 1, caractérisé en ce que les chambre (8, 8') sont emplies d'un liquide incompressible et sont raccordées par des conduits sous pression à un transducteur de pression se trouvant à l'extérieur de l'obstacle (1).

5. Dispositif suivant la revendication 1, caractérisé en ce que les chambres (8, 8') sont emplies d'un liquide incompressible et communiquent avec une moitié d'une chambre (12) de mesure, subdivisée par une paroi (13) sensible à la pression et disposée de préférence symétriquement par rapport au plan (a-a') médiateur de la partie (2) prismatique.

FIG 1

$$\frac{h}{a} = 0,5 \cdots 1$$

$$\frac{l}{a} = 0,5 \cdots 1$$

$$\frac{h+l}{a} = 1,2 \cdots 1,7$$

$$\frac{b}{a} = 0,5 \cdots 0,7$$

$$\frac{d}{a} = 0,15 \cdots 0,35$$

FIG 2

FIG 3